**Europäisches Patentamt**

**European Patent Office**

**Office européen des brevets**

(19)

(11) Veröffentlichungsnummer: **0 161 657**
**B1**

(12) # EUROPÄISCHE PATENTSCHRIFT

(45) Veröffentlichungstag der Patentschrift:
**12.08.87**

(21) Anmeldenummer: **85105866.9**

(22) Anmeldetag: **13.05.85**

(51) Int. Cl.⁴: **B 23 H 7/10,** B 23 H 7/26, B 23 H 7/02

(54) **Vorrichtung zum Führen einer draht- oder bandförmigen Schneidelektrode an einer Werkzeugmaschine.**

(30) Priorität: **15.05.84 CH 2393/84**
**28.05.84 DE 3419944**

(43) Veröffentlichungstag der Anmeldung:
**21.11.85 Patentblatt 85/47**

(45) Bekanntmachung des Hinweises auf die Patenterteilung:
**12.08.87 Patentblatt 87/33**

(84) Benannte Vertragsstaaten:
**CH DE FR GB IT LI LU SE**

(56) Entgegenhaltungen:
**WO-A-80/02395**
**DE-A-2 922 922**
**DE-A-3 021 669**
**DE-A-3 210 660**
**DE-C-2 625 349**
**GB-A-2 073 083**

(73) Patentinhaber: **AG für industrielle Elektronik AGIE Losone bei Locarno, CH- 6616 Losone/Locarno (CH)**

(72) Erfinder: **Kilcher, Beat, Via Ronco 13, CH- 6611 Arcegno (CH)**
Erfinder: **Levy, Gideon, Via Locarno 52, CH- 6616 Losone (CH)**

(74) Vertreter: **EGLI- EUROPEAN PATENT ATTORNEYS, Widenmayerstrasse 5, D-8000 München 22 (DE)**

EP 0 161 657 B1

## Beschreibung

Die Erfindung betrifft eine Vorrichtung zum Führen einer draht- oder bandförmigen Schneidelektrode an einer Werkzeugmaschine gemäss dem Oberbegriff des Patentanspruchs 1.

Auf bekannten funkenerosiven oder elektrochemischen Schneidanlagen wird mit Hilfe von Draht- oder Bandelektroden eine gewünschte vorgegebene Kontur aus einem Werkstück ausgeschnitten. Die Draht- oder Bandelektrode besteht in der Regel aus einem Draht mit einem Durchmesser zwischen 0,01 und 1,00 mm, in besonderen Fällen auch aus Bändern entsprechenden Querschnitts. Die funkenerosive Bearbeitung erlaubt aufgrund einer elektronischen Prozesssteuerung eine sehr hohe Bearbeitungsgenauigkeit, die typischerweise in der Grössenordnung von 0,001 mm liegt. Dementsprechend werden an die Führungs- und Antriebsorgane für die Drahtelektrode sehr hohe Genauigkeitsanforderungen gestellt.

Eine wesentliche Rolle für die Einhaltung der gewünschten Bearbeitungsgenauigkeit spielen auf derartigen Anlagen Einrichtungen zum Drahtantrieb und zur Führung des Schneiddrahtes. Drahtantriebseinrichtungen für das funkenerosive oder elektroerosive Schneiden sind beispielsweise aus DE-PS 2 625 349 bekannt. Dabei wird eine Schleife des Schneiddrahtes in der Arbeitszone durch geschwindigkeitsstarr angetriebene Rollenpaare vollständig von der Versorgungs- und Entsorgungsseite des Schneiddrahtes entkuppelt. Der Draht in der Arbeitsschleife wird dann mit besonderen Mitteln, z. B. Gewichten oder Federn gespannt und in hochpräzisen Führungsrollen geführt. Diese Einrichtungen haben sich in der Praxis bestens bewährt.

Mit der erweiterten Anwendung des funkenerosiven Schneidens in Verbindung mit besonderen elektronischen Steuerungen, welche die Relativlage zwischen zwei die Arbeitszone begrenzenden Drahtführungsköpfen steuern, z. B. gemäss DE-PS 2 052 261, hat es sich zusätzlich als zweckmässig erwiesen, bei grossen Drahtneigungseinkeln die Drahtführungsköpfe entsprechend zu orientieren, wie dies aus der Patentanmeldung WO 80-02395 bekannt ist.

Werden im praktischen Betrieb auf funkenerosiven Schneidanlagen, welche mit dem bewährten Drahtantrieb ausgerüstet sind, zusätzlich die Führungsköpfe relativ stark verschwenkt oder "orientiert", üben die im Joch der Anlage untergebrachten Drahtantriebe durch die übliche relativ hohe Drahtzugkraft in der Arbeitsschleife von beispielsweise 500 bis 2500 g sehr starke Zugkräfte auf die Führungsköpfe aus. Die Halterungen und die Antriebsmittel und schliesslich auch die Haltearme für die orientierten Drahtführungsköpfe können deshalb merklich verformt und ausgelenkt werden, was besonders dann der Fall ist, wenn mit grossem Konuswinkel, d.h. mit starker seitlicher Relativverlagerung eines der Führungsköpfe gegenüber dem anderen gearbeitet werden muss. Da die Drahtführungsköpfe unmittelbar geometriebestimmt für die Werkstücke bzw. deren Schnittgenauigkeit sind, stören solche Verformungen bei hochgenauen Bearbeitungsaufgaben. Die Anordnung der kompletten Drahtantriebs- und Führungsmittel direkt auf den orientierten Führungsköpfen ist wegen des notwendigen grossen Bauvolumens technisch nicht sinnvoll.

Die Aufgabe der vorliegenden Erfindung besteht darin, die Art der Führung des Drahtes in der Arbeitsschleife sowie die dabei auftretenden Kräfte so zu wählen, dass die Verformungen an den orientierten Führungsköpfen bzw. deren Halterungen möglichst klein bleiben.

Diese Aufgabe wird erfindungsgemäss durch die im Patentanspruch 1 definierten Merkmale gelöst.

Durch diese Maßnahme können die wesentlichen Elemente des Drahtantriebes wie bisher auf dem Maschinenjoch angeordnet bleiben, aber auf geringere Drahtzugspannung eingestellt werden. Trotzdem ist das sichere Umlenken und Führen des Drahtes in allen Umlenkzonen bis zur Arbeitsstrecke gewährleistet. Die unmittelbar an den Führungsköpfen angebrachten Einrichtungen zur Erhöhung der Zugspannung sorgen dafür, dass an der eigentlichen Schnittstrecke die für die benötigte Drahtzugspannung auf den Draht ausgeübten äusseren Zugkräfte ausschliesslich in Richtung der Drahtachse wirken, und zwar sowohl bei Schnitten mit zylindrischer als auch mit konischer Geometrie.

Die mit der erfindungsgemässen Lösung erzielten Vorteile liegen insbesondere in der Möglichkeit, praktisch unbegrenzte Schräglagen des Drahtes zu realisieren und damit das Einsatzgebiet für derartige Werkzeugmaschinen wesentlich auszudehnen. Da bei den in der Praxis häufig benötigten konischen prismatischen Durchbrüchen in einer Ecke zwei geschrägte Ebenen zusammenstossen und dort einen viel höheren Schrägungswinkel erzeugen (Effekt des Schiffsbuges), der mit der Spitzwinkligkeit der Ecke zwischen den Beitenflächen sehr schnell zunimmt, stellt die vorliegende Möglichkeit des präzisen konischen Schneidens auch bei normalen Anwendungen im Werkzeugbau bereits eine merkliche Verbesserung dar. Insgesamt wird mit der erfindungsgemäßen Vorrichtung die beste einzuhaltende Arbeitsgenauigkeit der Anlage von der Drahtführungseineinrichtung praktisch nicht mehr beeinflußt und dennoch auch bei größeren Konuswinkeln, z. B. von mehr als 10°, ein sicherer und ebenso präziser Betrieb des Drahtantriebes gewährleistet.

Im folgenden werden Ausführungsbeispiele der Erfindung anhand von Zeichnungen näher erläutert. Es zeigen:

Fig. 1 den schematischen Aufbau eines Drahtantriebs an einer funkenerosiven Schneidanlage, mit orientierten Führungsköpfen und mit einer Einrichtung zur Erhöhung der Drahtzugspannung in der Arbeitsstrecke,

Fig. 2 Einzelheiten der Klemmradanordnung im Drahtantrieb gemäss Fig. 1,

Fig. 3 ein weiteres Ausführungsbeispiel für ein Drahtführungselement an einer Vorrichtung gemäss Fig. 1,

Fig. 4 ein weiteres Ausführungsbeispiel für einen Drahtantrieb, als Alternative zum Ausführungsbeispiel gemäss Fig. 1,

Fig. 5 eine zusätzliche Ausbildung an einer Vorrichtung zum Drahtantrieb und

Fig. 6 eine weitere zusätzliche Vorrichtung an den beschriebenen Drahtantriebsvorrichtungen.

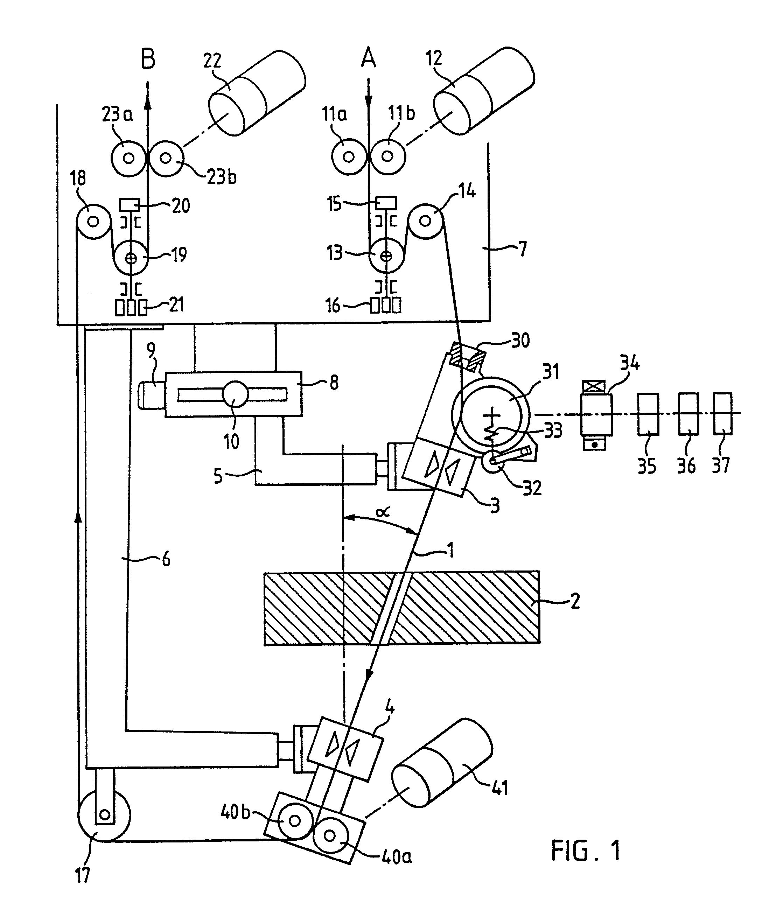

In Fig. 1 ist schematisch und ausschnittsweise die Arbeitszone einer funkenerosiven Schneidanlage dargestellt mit einer Drahtelektrode 1 und einem Werkstück 2, wobei Führungsköpfe 3 und 4 die Drahtelektrode 1 gegenüber dem Werkstück 2 in der beabsichtigten Lage halten, beispielsweise gemäss der erwähnten Publikation WO 80-02395, und für die Schräglage der Drahtelektrode 1 unter einem Neigungswinkel α entsprechend orientiert sind. Die Führungsköpfe 3 und 4 sind an Tragarmen 5 und 6 beweglich befestigt. Die Tragarme 5, 6 stehen mit einem Maschinengestell 7 in Verbindung, das in Figur 1 nur teilweise angedeutet ist. Dabei ist der obere Führungsarm 5 über einen Koordinatenschlitten 6 an dem Maschinengestell 7 befestigt. Der Koordinatenschlitten 8 ist mit Stellmotoren 9 und 10 versehen. In diesem karthesischen Koordinatenschlitten 8 kann durch die Motoren 9 und 10 die Relativlage des oberen Führungskopfes 3 gegenüber dem unteren Führungskopf 4 gesteuert eingestellt werden. Dadurch lässt sich ein gewünschter Neigungswinkel α für die Schnittkontur einstellen.

Während der funkenerosiven Bearbeitung wird die Drahtelektrode 1 von nicht gezeigten Antriebsmitteln der Werkzeugmaschine durch das auf dem Tisch der Maschine befestigte Werkstück 2 hindurchgeführt. Aufspannmittel für das Werkstück 2 sind in der Figur der Einfachheit halber nicht dargestellt.

Die Drahtelektrode 1 wird gemäss dem bevorzugten Beispiel auf der Maschine von einer Versorgungsseite A über ein erstes Klemmrollenpaar 11a, 11b zugeführt, welches mit konstanter Geschwindigkeit von einem Getriebemotor 12 angetrieben ist. Auf der Versorgungsseite A kann der Draht z. B. auf Spulen oder Spindeln gespeichert sein. Eventuelle störende Abzugskräfte, die von diesen Einrichtungen ausgehen können, werden aufgrund des geschwindigkeitsstarren Antriebes durch das Klemmrollenpaar 11a und 11b nicht auf den Arbeitsbereich des Drahtes durchgelassen. Der Draht wird anschliessend um eine Tänzerrolle 13 und über eine Umlenkrolle 14 geführt. Die Tänzerrolle 13 ist beispielsweise mit einem variablen Gewicht 15 belastet. Anstelle des Gewichtes können auch Federelemente oder hydraulische Kraftelemente vorgesehen sein, welche an der Tänzerrolle 13 angreifen. Durch diese Massnahme wird die Drahtelektrode 1 mit einer geringen Zugkraft von im Beispiel wenigen 100 g beaufschlagt, wodurch sie unter allen Schneidbedingungen, insbesondere bei allen entstehenden Verlagerungen während des konischen Schneidens, sicher dem oberen Führungskopf 3 zugeführt wird. Ein Lagefühler 16 für die Tänzerrolle 13 steuert die Antriebsgeschwindigkeit des Getriebemotors 12 so, dass von der Versorgungsseite A immer Draht mit einer solchen Geschwindigkeit zur Arbeitsstrecke zugeführt wird, wie er dort verbraucht wird.

Nach dem unter erhöhter Spannung erfolgenden Durchlaufen des Schneiddrahtes bzw. der Drahtelektrode 1 durch die Arbeitsstrecke, was anschließend im einzelnen beschrieben wird, wird der Draht wiederum nur mit geringer Vorspannung von im Beispiel wenigen 100 g Zugspannung aus der Arbeitsstrecke zur Entsorgungsseite B geführt. Dazu dient neben weiteren Umlenkrollen 17 und 18 eine zweite Tänzerrolle 19, die mit einem zweiten variablen Gewicht 20 beaufschlagt ist. Ein zweiter Lagefühler 21 steuert die Geschwindigkeit eines zweiten Getriebemotors 22 derart, dass über ein zweites Klemmrollenpaar 23a und 23b der Draht der Entsorgungsseite B zugeführt wird. Eventuelle Ruck- und Rupfkräfte von nachfolgenden Schnitzelwerken, Drahtknickern oder Aufwickelspulen auf der Entsorgungsseite B werden durch den geschwindigkeitsstarren Antrieb des zweiten Klemmrollenpaares 23a, 23b aus der Arbeitsschleife ferngehalten.

Die Zuleitung des von der Versorgungsseite A schwach gespannten Drahtes zum oberen Führungskopf 3 erfolgt zunächst durch ein Drahtführungselement 30, z. B. einen Ring, das vorzugsweise aus einem reibungsarmen und verschleissfesten Material, z. B. aus Saphir mit feinster Oberfläche, besteht. Damit ist sichergestellt, dass der Draht praktisch keinem Verschleiss unterliegt und dass keine zusätzlichen Reibungskräfte an dieser Einlenkzone entstehen. Hinter dem Drahtführungselement 30 umschlingt der Draht ein V-Rillen-Rad 31, von dem er anschliessend in einem solchen Winkel in den oberen Führungskopf 3 und zur Arbeitsstrecke geführt wird, dass in dem V-Rillen-Rad 31 keine Drahtüberlagerung stattfindet. Möglichst nahe an der Auslaufstelle des Drahtes von dem V-Rillen-Rad 31 befindet sich ein Klemmrad 32, das von einer Zugfeder 33 gegen die Achse des V-Rillen-Rades 31 gezogen wird und die Drahtelektrode 1 an diesem Rad einklemmt.

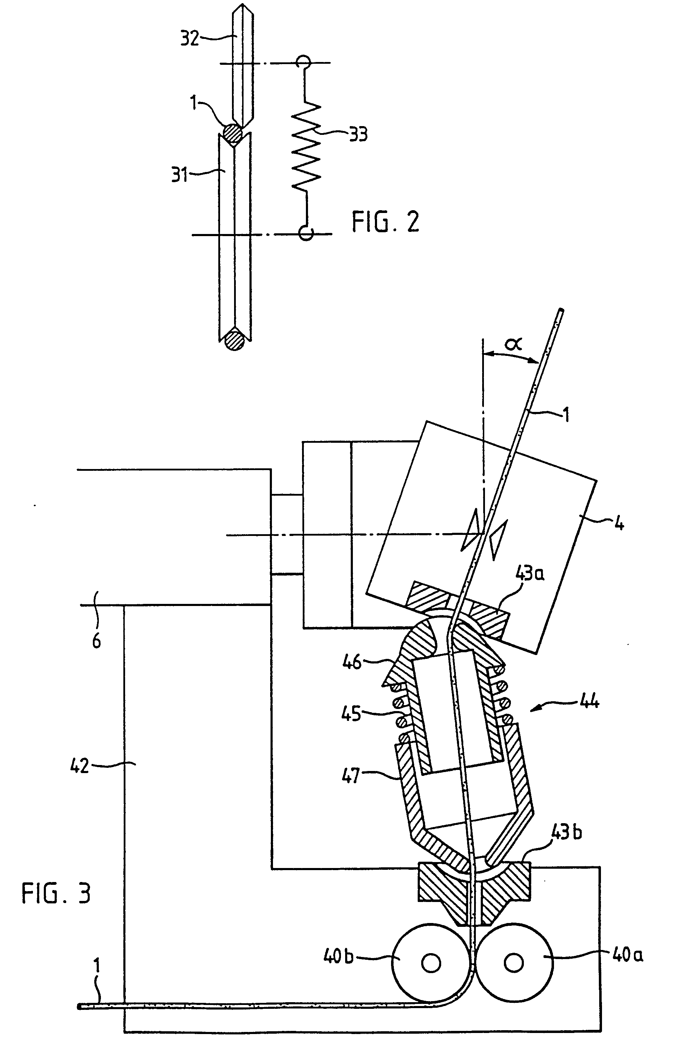

In Fig. 2 ist diese Klemmvorrichtung noch einmal in der Seitenansicht dargestellt. Während das V-Rillen-Rad 31 die Drahtelektrode 1 in seiner Vertiefung aufnimmt, hat das Klemmrad 32 eine V-förmige Erhöhung, die leicht versetzt mit einer Flanke auf der Drahtelektrode 1 läuft und diese gegen eine Seitenflanke des V-Rillen-Rades 31 klemmt. Die Klemmkraft ist durch die Zugfeder 33 definiert.

Das V-Rillen-Rad 31 befindet sich fest montiert auf einer drehbar gelagerten Achse, auf welcher weitere Einrichtungen montiert sind. Als erstes ist dies ein Hysterese-Motor 34, auf dessen Läufer eine einstellbare Drahtzugfeder gegen die Laufrichtung, des Drahtes berührungslos aufgebracht wird. Diese Einstellkraft wirkt über das V-Rillen-Rad 31 in balance zu der geringen Kraft der Zuführseite, die sehr gleichmässig ist, als Einstellorgan für die Drahtzugspannung in der Arbeitszone, welche z. B. im Bereich zwischen 500 und 2500 g liegt. Neben dem Hysterese-Motor 34 befindet sich ebenfalls auf der drehbaren Achse des V-Rillen-Rades 31 ein Winkelkodierer 35, mit dessen Hilfe sowohl die Drehgeschwindigkeit als auch die Position dieses Rades gemessen werden kann. Anschliessend geht die Achse in einen Freilauf 36 über, der z. B. als mechanischer Kugelfreilauf ausgebildet sein kann. Dieser Freilauf sperrt die Drehung des V-Rillen-Rades 31 in Rückwärtsrichtung, so dass sich das V-Rillen-Rad 31 nur in Drahtlaufrichtung drehen kann, solange die Gegenseite des Freilaufs festgehalten wird. Anschliessend an den Freilauf 36 ist ein Elektromotor 37 vorgesehen, der die Sekundärseite des Freilaufs in beiden Richtungen antreiben kann. Durch diesen Motor 37 ist es möglich, das V-Rillen-Rad 31 in Drahtlaufrichtung anzutreiben, um die Drahtelektrode 1 zur Unterstützung des Bedieners oder im Rahmen einer automatischen Einfädeleinrichtung vorzuschieben. Der Motor 37 kann auch in Rückwärtsrichtung angetrieben werden, so dass dann der Freilauf 36 entsperrt wird und das V-Rillen-Rad 31 durch die geringe Belastung, die vom Gewicht 15 der Tänzerrolle 13 auf der Zuführseite liegt, rückwärts gedreht werden kann. Auf diese Weise lässt sich ein Drahtrest nach dem Ende einer arbeit und zur Vorbereitung der nächsten Startposition nach dem Durchtrennen aus der Arbeitszone zurückziehen.

An der Drahtauslaufseite, hinter der Arbeitsstrecke, am unteren Führungskopf 4, ist ein drittes Klemmrollenpaar 40a, 40b angeordnet, das geschwindigkeitsstarr und mit prozessgerecht einstellbarer Geschwindigkeit durch einen dritten Getriebemotor 41 angetrieben wird. Dieses dritte Klemmrollenpaar 40a, 40b liefert eine Gegenkraft zu der dem V-Rillen-Rad 31 aufgezwungenen erhöhten Drahtspannung und zieht die Drahtelektrode 1 durch die Arbeitsstrecke kontinuierlich mit der eingestellten Geschwindigkeit und unabhängig davon, ob sich an den Drahtführungen oder in der Bearbeitungszone durch Verschleiss, Berührung oder schwankende Reibung die den Drahtzug beeinflussenden Bedingungen ändern. Durch den geschwindigkeitsstarren Antrieb bleiben die erwähnten geringeren Abzugskräfte auf der Entsorgungsseite B ohne Einfluss auf die Drahtspannung innerhalb der Arbeitsstrecke. Die Entsorgungsseite B paßt sich über die zweite Tänzerrolle 19 und den mit ihr verbundenen zweiten Lagefühler 21, der die Geschwindigkeit des zweiten Getriebemotors 22 steuert, selbsttätig der Auslaufgeschwindigkeit am dritten Klemmrollenpaar 40a, 40b an.

Ein vereinfachtes Ausführungsbeispiel wird in Verbindung mit Fig. 3 beschrieben. Wenn der untere Tragarm 6, der den auslaufseitigen unteren Führungskopf 4 trägt, unmittelbar am Maschinengestell 7 befestigt ist, führt er keine Verstellbewegungen zur Erzeugung des Schrägungswinkels α aus, wie der obere Führungskopf 3 am Tragarm 5 mit Hilfe des Koordinatenschlittens 8. Das Klemmrollenpaar 40a, 40b gemäss Fig. 1 ist daher in diesem Fall statt direkt am Führungskopf 4 in dessen unmittelbarer Nähe über einen Halter 42 starr am Tragarm 6 befestigt. Am Halter 42 ist auch der dritte Getriebemotor 41 befestigt. Sowohl im Halter 42 als auch auf der Auslaufseite des unteren Führungskopfes 4 ist je eine zentrisch durchbohrte Gelenkpfanne 43a, 43b angeordnet. Zwischen diesen beiden Gelenkpfannen ist eine Teleskopstütze 44 angeordnet. Diese Teleskopstütze weist eine zentrale Bohrung auf, durch welche die Drahtelektrode 1 vom Austritt aus dem Führungskopf 4 durch das Zentrum der Gelenkpfanne 43a zur zentralen Bohrung innerhalb der Gelenkpfanne 43b geleitet wird und von dort aus zum dritten Klemmrollenpaar 40a, 40b. Die Teleskopstütze 44 folgt selbsttätig dem Winkel, auf den der untere Führungskopf 4 eingeschwenkt wird. Aus diesem Grund ist sie in den Gelenkpfannen 43a, 43b reibungsarm gelagert. Mit Hilfe einer Druckfeder 45 hat die Teleskopstütze 44 die Tendenz, sich längs ihrer Achse auszudehnen. Die Druckfeder 45 wirkt zwischen dem Teleskopkolben 46 und dem Teleskopzylinder 47. Sie ist derart dimensioniert, dass die Reibungskräfte an den Gelenkpfannen 43a und 43b minimal bleiben, dass aber andererseits ein Ausschnappen der Teleskopstütze 44 aus diesen Gelenkpfannen unter der Wirkung der resultierenden Drahtkräfte vermieden wird. Die gesamte Einrichtung ist derart getroffen, dass das dritte Klemmrollenpaar 40a, 40b möglichst nahe am auslaufseitigen Führungskopf 4 liegt. Damit werden die Auslenkwege klein gehalten und die auf den Draht einwirkenden verformenden Beanspruchungen bleiben möglichst klein.

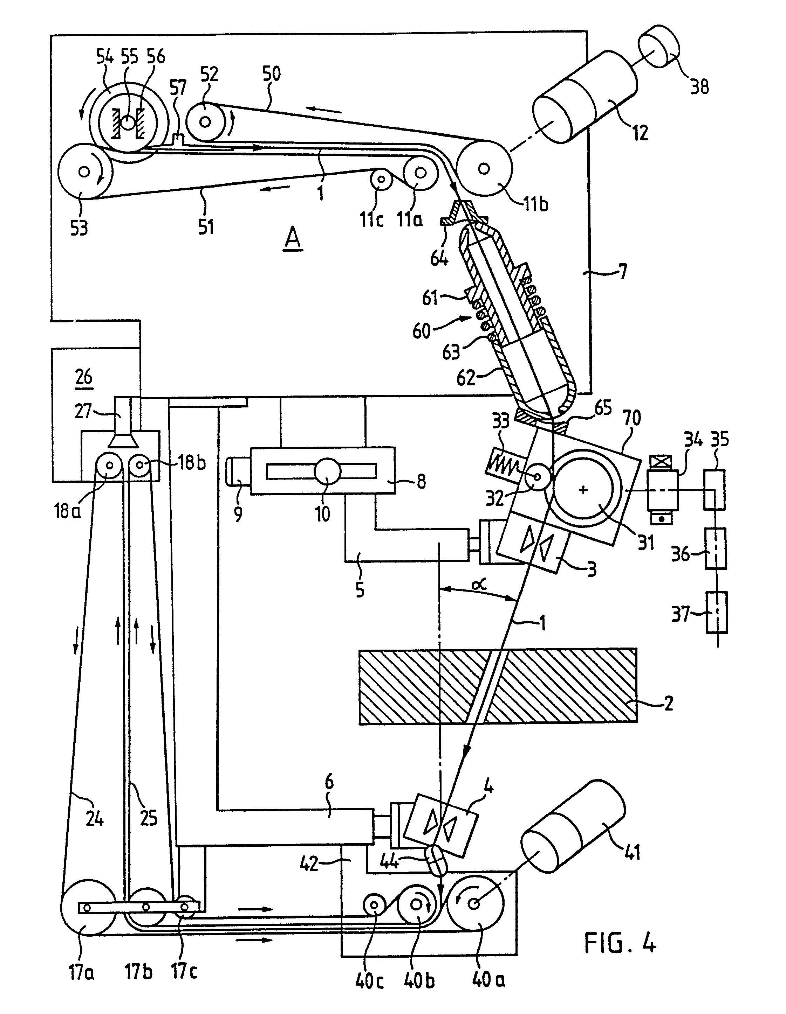

Anhand von Fig. 4 wird das Ausführungsbeispiel eines erfindungsgemässen Drahtantriebes unter Verwendung von Bandantriebsmitteln für die Drahtzufuhr und die Drahtentsorgung beschrieben. Das Ausführungsbeispiel stellt eine Alternative zu dem in Fig. 1 dargestellten Beispiel dar. Entsprechende Teile sind mit gleichen Bezugszeichen bezeichnet. Über das Klemmrollenpaar 11a, 11b wird durch den Getriebemotor 12 ein doppelter Bandantrieb mit Transportbändern 50 und 51 angetrieben, deren rücklaufender Teil jeweils um Umlenkrollen 52 bzw. 11c und 53 zurückgeführt wird. Die zuzuführende Drahtelektrode 1 ist auf einer Neudraht-Rolle 54 gespeichert. Auf der Versorgungsseite A wird die Drahtelektrode vom mittleren rücklaufenden Teil der Transportbänder 50, 51 dem Klemmrollenpaar 11a, 11b zugeführt. Dabei wird die Drahtelektrode 1 von der Neudraht-Rolle 54 abgewickelt, wobei die Neudraht-Rolle 54 mit ihrer Achse 55 in einer Achsführung 56 gehalten ist. Der abgezogene Draht wird von einem Drahtführer 57 an die zentrale Zuführzone der Transportbänder 50, 51 gebracht. Um übergrosse Schräglaufwinkel des Drahtes zwischen der Abspulstelle in den Endlagen der Wicklung auf der Neudraht-Rolle 54 bis zum Drahtführer 57 zu vermeiden, wird zweckmässigerweise zwischen den beiden ein genügend grosser Abstand eingehalten. Vorzugsweise wird die Umfangsgeschwindigkeit für die Neudraht-Rolle 54 an die Winkellage des gespannten Drahtes angepaßt. Die Laufgeschwindigkeit der Transportbänder 50, 51 entspricht im Betrieb der Zuführgeschwindigkeit der Drahtelektrode 1 in den Arbeitsbereich. Dies wird im Beispiel gemäß Fig. 4 dadurch ermöglicht, daß die Achse 55 in der Achsführung 56 vertikal beweglich ist, wobei die Neudraht-Rolle 54 mit ihrem Drahtumfang und damit mit ihrem Gewicht auf dem Band 51 aufliegt. Somit wird die Rolle 54 automatisch entsprechend dem gerade aktuellen Durchmesser der Drahtlagenwicklung mit einer Geschwindigkeit gedreht, die der Bandlaufgeschwindigkeit entspricht. Sollen Drahtrollen mit relativ grossem Gewicht eingesetzt werden, lässt sich das Auflagegewicht dieser Spule zusätzlich begrenzen, indem die Achse 55 der Neudraht-Rolle 54 auf Ausgleichsfedern abgestützt ist.

Der Drahtantrieb hinter dem Klemmrollenpaar 11a, 11b kann ähnlich ausgeführt sein wie im Ausführungsbeispiel nach Fig. 1 beschrieben.

Gemäß dem in Fig. 4 dargestellten Ausführungsbeispiel ist auch auf der Zuführungsseite des Drahtes eine Teleskopstütze 60 vorgesehen, die zwischen den Gelenkpfannen 64 beim Klemmrollenpaar 11a, 11b und der Gelenkpfanne 65, die den Drahtführungsring 30 (Fig. 1) ersetzt, abgestützt wird. Die Teleskopstütze 60 besteht wiederum aus einem Teleskopkolben 61 und einem Teleskopzylinder 62, die über die Druckfeder 63 gegeneinander abgestützt sind, sodass sich die Länge der Teleskopstütze 60 der jeweiligen Distanz zwischen den Gelenkpfannen 64 und 65 anpassen kann. Auch an der Abführseite von der Arbeitsstrecke wird an die gemäss Fig. 3 angeordneten Klemmrollen 40a und 40b je ein Band 24 bzw. 25 angeschlossen und über den Getriebemotor 41 angetrieben. Entsprechend diesem Bandantrieb werden zusätzliche Umlenkrollen 18a, 18b, 17a, 17b, 17c und 40c eingeführt. Der Transport der Drahtelektrode 1 erfolgt wiederum so, dass die beiden Bänder 24/25 in der gegeneinander gespannten Strecke die Drahtelektrode 1 zwischen sich eingeklemmt transportieren, während sie auf den Aussenseiten leer zurückgeführt werden. Die Bänder 24/25 übergeben am Auslauf bei den Umlenkrollen 18a/18b die Drahtelektrode 1 an einen Fangtrichter 27, durch den sie einer Entsorgung 26 zugeführt werden, die z. B. ein einfacher Sammelbehälter oder ein Schnitzelwerk bzw. eine Aufwickelspule sein kann.

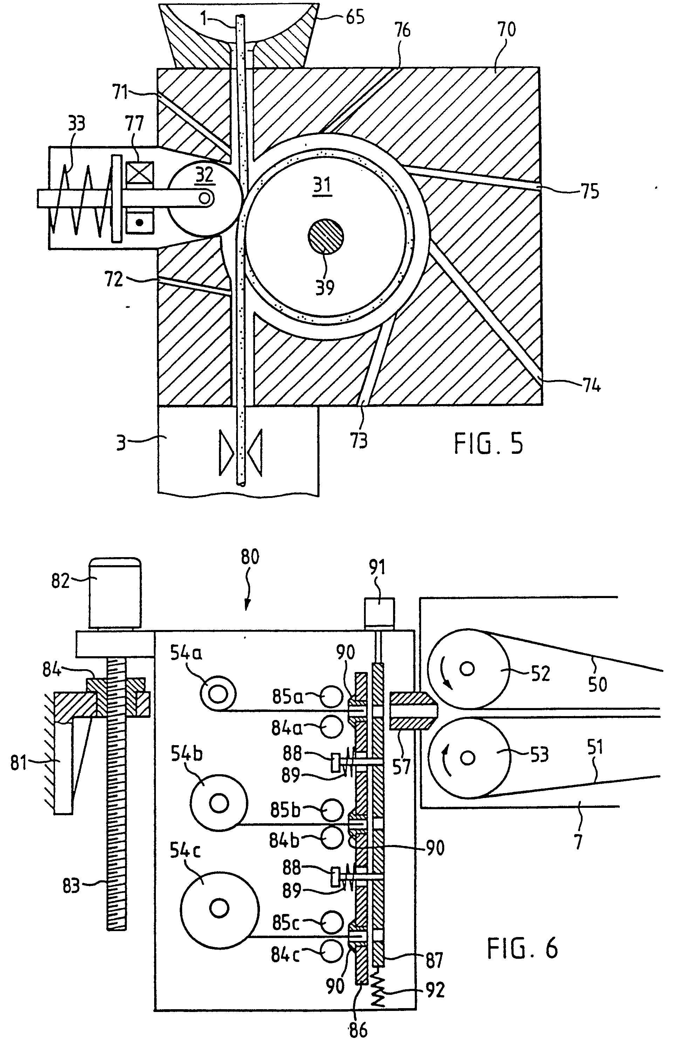

Wird die zuführseitige, bei dem Klemmrollenpaar 11b, 11a angeordnete Gelenkpfanne 64 mit einer Drahteinspritzein-Drichtung, z. B. gemäss DE-OS 2 351 357, kombiniert, so kann in dieser Bandabtriebsausführung von der Neudrahtrolle 54 her der Draht vollautomatisch durch die ganze Arbeitszone bis zum Entsorgungsgerät 27 transportiert werden. Dies setzt voraus, dass die Umschlingung des V-Rillenrades 31 automatisch ermöglicht wird. Ein technisches Ausführungsbeispiel dafür wird in Fig. 5 beschrieben.

Die den Drahtführungsring 30 ersetzende Gelenkpfanne 65 wird an einem im Schnitt dargestellten Gehäuseblock 70 so montiert, dass die zugeführte Drahtelektrode 1 in einen Bohrungskanal einmündet, der tangential auf die V-Rillen des V-Rillenrades 31 hinführt, das auf der Achse 39 gelagert ist. Damit die Drahtelektrode 1 sicher zur anlage kommt, befinden sich im Gehäuseblock 70 eine Anzahl tangentialer Einblasöffnungen, in der gezeichneten Darstellung die Bohrungen 71 bis 76, die während der Dauer des Einspritzens der Drahtelektrodel mit Blasluft beaufschlagt sind und die Einführung der Drahtelektrode 1 um das V-Rillenrad 31 unterstützen. Das V-Rillenrad 31 wird während des Einfädelns gleichzeitig mit entsprechender Geschwindigkeit durch den Motor 37 angetrieben. Ausserdem wird für die Dauer des Einfädelns das Klemmrad 32 durch einen Magnet 77 gegen die Kraftwirkung der Feder 33 abgehoben und damit ausser Eingriff zum V-Rillenrad 31 gebracht. Die Einführung der Drahtelektrode 1 in den oberen Drahtführungskopf 3 übernimmt dann ein weiterer Bohrungskanal.

In der Darstellung gemäss Fig. 4 kommt es nun bei Benutzung eines Gehäuseblockes 70 noch darauf an, die niedrige Drahtzugspannung auf der Zuführseite bis an das V-Rillenrad 31 zu regeln. Dazu ist auf der Achse des Getriebemotors 12 noch ein weiterer Encoder 38 montiert, der im Vergleich zum Winkelkodierer 35 elektronisch ein Geschwindigkeitsdifferenzsignal zu bilden gestattet. Mit Hilfe dieser Geschwindigkeitsdifferenz zwischen dem Klemmrollenpaar 11a, b und dem V-Rillenrad 31 kann im elastischen Bereich der Drähte eine der benötigten Zugkraft entsprechende Differenzgeschwindigkeit eingestellt werden.

Damit in der gemäss Figur 4 beschriebene Einrichtung eine sehr lange Autarkie einer Maschine erreicht werden kann und damit es auch möglich ist, innerhalb der Programmsteuerung die Drahtabmessungen zu wechseln, kann zusätzlich eine automatische Drahtwechseleinrichtung 80 gemäss Fig. 6 zu dem Drahtantrieb vorgesehen werden.

Die Auflage der Neudrahtrolle unterbleibt in diesem Fall, und die Umlenkrollen 53, 52 werden auf dem Maschinengestell 7 parallel angeordnet. Ferner ist ein geänderter Drahtführer 57a vorgesehen. Die Drahtwechseleinrichtung 80 kann über ihren Flansch 81 an einem separaten Gestell oder aber auch an der funkenerosiven Schneidanlage befestigt sein. Gesteuert von einem Motor 82 lässt sich über eine Spindel 83, die mit einer Mutter 83a zusammenwirkt, das Gehäuse der Drahtwechseleinrichtung 80 auf verschiedene Höhen einstellen. Gemäß Fig.6 sind drei Neudrahtrollen 54a, 54b, 54c angeordnet, die gleichen oder verschiedenen Draht in gleicher oder verschiedener Menge tragen können. Beim Einlegen dieser Neudrahtrollen in das Gehäuse wird jeweils das freie Drahtende der geladenen Neudrahtrolle 54 in ein zugeordnetes Klemmrollenpaar 84a, 85a/84b, 85b/84c, 85c, eingefädelt. Entsprechend der vom Motor 82 angesteuerten Position vor den Drahtführer 57a wird jeweils nur das dort befindliche Klemmrollenpaar 84, 85 angetrieben. Gleichzeitig wird über eine Schlupfbremse die jeweilige Neudrahtrolle 54 mitbewegt, sodass in der Zuführstrecke von der Neudrahtrolle bis zum Klemmrollenpaar 84, 85 eine kontrollierte leichte Drahtspannung aufrechterhalten wird. Auslaufseitig der Klemmrollenpaare 84, 85 befindet sich ein Schermesserpaar 86, 87, das über Nocken 88 und Federn 89 flächig aufeinandergespannt ist. An der Einführzone der Drähte von den Klemmrollenpaaren 84, 85 befinden sich gehärtete Buchsen 90, die gegenüber dem Scherblatt 87 als Scheranschlag funktionieren. Die Betätigung der Schere 87 erfolgt von einem Magnet 91 in der Schneidrichtung, während der Rückzug durch die Feder 92 ausgelöst wird. Im Programm einer praktischen Bearbeitung braucht demgemäss nur beim Wunsch des Spulenwechsels ein Drahtende mit dem Schermesserpaar 86, 87 abgetrennt werden, und der gesamte Drahtantrieb fördert den Drahtrest bis zur Entsorgungseinrichtung 26. Nach Einstellung des Drahtwechselgehäuses über den Motor 82 auf die nächstgewünschte Drahtsorte wird dann mit Hilfe der Klemmrollenpaare 84, 85 der Draht in den Drahtführer 57a und zum Bandantrieb geschoben, bis dieser sicher die weiteren Transportaufgaben übernehmen kann. Spätestens dann wird der Motorantrieb zu dem Klemmrollenpaar 84, 85 ausgekuppelt.

Der beschriebene Drahtantrieb bietet ausser der Erlangung der notwendigen Genauigkeit zum funkenerosiven Konisch-Schneiden mit orientierten Führungsköpfen auch die Möglichkeit, das automatische Einfädeln der Drahtelektrode 1 mit einer Spritzdüse zu der Vorrichtung zu kombinieren. Der Einfädelstrahl der Spritzdüse kann mit den orientierten Führungsköpfen 3,4 ebenfalls auf die momentane Lage der Drahtzone orientiert werden und wird auslaufseitig automatisch vom Klemmrollenpaar 40a, 40b erfasst -auch bei Benutzung der weniger aufwendigen Lösung gemäss Fig. 4. Der Spritzstrahl braucht nur der Ausrichtung der Drahtelektrode 1 zu dienen, während ihr Vorschub mit Hilfe des Motors 37 über den Freilauf 36 und das V-Rillenrad 31 erfolgt, auf dem die Drahtelektrode durch die Klemmrolle 32 in der V-Rille gehalten wird. Bei unterschiedlich eingestellter Rachenweite zwischen den Führungsköpfen 3, 4 dient der Winkelkodierer 35 zur Messung der notwendigen Vorschubstrecken.

Duich die Möglichkeit, mit dem Winkelkodierer 35 die Zuführgeschwindigkeit der Drahtelektrode 1 zu messen 1, kann aus dem Vergleich- der Abzugsgeschwindigkeit am Klemmrollenpaar 40b, 40a und der Zuführgeschwindigkeit an der V-Rillenrolle 31 ein Geschwindigkeitsdifferenzsignal gewonnen werden, das über die Gleichmässigkeit der Drahtzugspannung in der Arbeitsstrecke Auskunft gibt und der Detektion von bevorstehenden Drahtrissen dient. Sowohl durch thermische Ueberlastung der Drahtelektrode 1 in der Arbeitsstrecke, als auch durch übermässige Dehnungen, wenn Draht ungenügender mechanischer Festigkeit durch die Strecke geführt wird, entsteht eine solche Geschwindigkeitsdifferenz. Die elektronische Auflösung der Geschwindigkeitsmessung kann über nicht dargestellte, elektronische Einrichtungen dazu dienen, dass ein Entlastungssignal für die Drahtspannkraft auf den Hysterese-Motor 34 oder ein Leistungsrückschaltsignal auf den Erodiergenerator schneller eintritt als der Bruch des Drahtes, der auf diese Weise verhindert wird. Bei der Erfassung der Geschwindigkeit ist es gleichgültig, ob die entstehende Dehnung thermisch oder im elastischen Bereich der Spannungs/-Dehnungskurve des Drahtmaterials oder schon in dessen plastischer Verformungszone erfolgt.

**Patentansprüche**

1. Vorrichtung zum Führen einer draht- oder bandförmigen Schneidelektrode (1) an einer Werkzeugmaschine mit Hilfe eines oberen und eines unteren Elektrodenführungskopfes (3, 4), sowie mit ersten Antriebsmitteln (40a, 40b, 41) zum axialen Durchziehen der Schneidelektrode (1) durch den Arbeitsbereich, und mit auf die Schneidelektrode (1) wirkenden Gegenhaltemitteln (31, 32, 34) zur Erzeugung einer definierten axialen Zugspannung an der Schneidelektrode (1),
dadurch gekennzeichnet,
daß die ersten Antriebsmittel (40a, 40b, 41) im Bereich eines Elektrodenführungskopfes (4) und die Gegenhaltemittel (31, 32, 34) im Bereich des anderen Elektrodenführungskopfes (31) angeordnet sind, derart, daß die Schneidelektrode (1) nur im Arbeitsbereich mit einer für den Elektroerosionsbetrieb erforderlichen Zugspannung beaufschlagt ist und der übrige Elektroden-Führungsbereich von erhöhten Zugspannungen auf die Schneidelektrode (1) freigehalten ist.

2. Vorrichtung nach Anspruch 1, dadurch gekennzeichnet, daß die ersten Antriebsmittel (40a, 40b, 41) einen geschwindigkeitsstarren Motorantrieb (41) und die Gegenhaltemittel (31, 32, 34) eine die Elektrode (1) führende Rolle (31) mit drehmomentstarrer Wirkung aufweisen.

3. Vorrichtung nach Anspruch 1 oder 2, dadurch gekennzeichnet, daß den ersten Antriebsmitteln (40a, 40b, 41) Entsorgungsvorrichtungen (24, 25) für die Elektrode (1) unittelbar nachgeordnet sind.

4. Vorrichtung nach wenigstens einem der vorstehenden Ansprüche, dadurch gekennzeichnet, daß die ersten Antriebsmittel (40a, 40b, 41) ein Klemmrollenpaar (40a, 40b) aufweisen, welches an einem bezüglich der axialen Elektrodenbewegung auslaufseitigen Tragarm (6) befestigt ist, welcher auch den Elektrodenführungskopf (4) trägt.

5. Vorrichtung nach wenigstens einem der vorstehenden Ansprüche, dadurch gekennzeichnet, daß zwischen wenigstens einem Elektrodenführungskopf (3; 4) und den hierzu benachbarten, jeweils außerhalb der Bearbeitungszone (3...4) angeordneten Elektroden-Führungselementen (11a, 11b; 42) ein aus Teleskopstützen (44; 60) und zugeordneten Gelenkführungen (43a, b; 64, 65) bestehendes Elektrodenführungselement vorgesehen ist.

6. Vorrichtung nach wenigstens einem der vorstehenden Ansprüche, dadurch gekennzeichnet, daß im Bereich der Elektroden-Führungszone ein Weg-aufnehmendes Messelement (35) zur Wegerfassung der Elektrode (1) vorgesehen und mit Steuerungsvorrichtungen zum automatischen Transport der Elektrode (1) in Verbindung steht.

7. Vorrichtung nach Anspruch 6, dadurch gekennzeichnet, daß das Meßelement (35) in eine Auswerteinrichtung zur Erfassung von Elektrodenrissen einbezogen ist.

8. Vorrichtung nach Anspruch 6 oder 7, dadurch gekennzeichnet, daß zweite Antriebsmittel (11a, 11b, 12) zum Antrieb der Elektrode (1) außerhalb des Arbeitsbereiches (3...4) vorgesehen und mit einem Weg- bzw. Geschwindigkeitsmeßelement (38) verbunden sind, welches zusammen mit dem ersten Meßelement (35) an eine Einrichtung zur Ermittlung einer Geschwindigkeitsdifferenz angeschlossen ist und daß der Ausgang dieser Einrichtung mit dem Eingang einer weiteren Einrichtung zur Regelung der zweiten Elektrodenantriebsmittel (11a, b, 12) verbunden ist.

9. Vorrichtung nach wenigstens einem der vorstehenden Ansprüche, dadurch gekennzeichnet, daß die ersten Antriebsmittel (40a, 40b, 41) und/oder die Gegenhaltemittel (31, 32, 34) ein eine keilförmige Nut aufweisendes Transportrad (31) und eine federnd die Elektrode (1) in die Nut pressende Andruckrolle (32) aufweisen.

10. Vorrichtung nach Anspruch 9, dadurch gekennzeichnet, daß das Transportrad (31) von einem Gehäuseblock (7) umgeben ist, welcher im wesentlichen tangential auf die Nut im Transportrad zulaufende Förderkanäle (71 - 76) aufweist.

11. Vorrichtung nach wenigstens einem der vorstehenden Anspruche, dadurch gekennzeichnet, daß die außerhalb des Arbeitsbereiches (3...4) liegenden Elektrodenführungselemente Bandführungselemente (50, 51) enthalten und die Elektroden-Versorgungsrolle (54) mit der Elektroden-Mantelfläche direkt auf einem der Bandführungselemente (51) aufliegt.

12. Vorrichtung nach wenigstens einem der vorstehenden Ansprüche, gekennzeichnet durch eine Einrichtung (80) zur Aufnahme mehrerer Elektroden-Vorratsrollen (54a, 54b, 54c) und durch eine steuerbare Umschalteinrichtung (82, 83, 83a) zur Einführung der auf einer ausgewählten Vorratsrolle (54a, b, c) befindlichen Elektrode (1) in die Elektrodenführungselemente.

## Claims

1. Arrangement for guiding a wire or ribbon shaped cutting electrode (1) on a machine tool with the aid of an upper and a lower electrode guide head (3, 4) and also with first drive means (40a, 40b, 41) for the purpose of drawing the cutting electrode (1) axially through the work area and with counter-holding means (31, 32, 34) acting on the cutting electrode (1) for the purpose of producing a defined axial tensile stress in the cutting electrode (1), characterised in that the first drive means (40a, 40b, 41) are arranged in the area of an electrode guide head (4) and the counter-holding means (31, 32, 34) are arranged in the area of the other electrode guide head (3) in such a way that tensile stress necessary for the electroerosion operation acts upon the cutting electrode (1) only in the work area and the other electrode guide area is kept free of increased tensile stresses on the cutting electrode (1).

2. Arrangement according to claim 1, characterised in that the first drive means (40a, 40b, 41) have a motor drive (41) with fixed speed and the counter-holding means (31, 32, 34) have a roller (31) guiding the electrode (1) with a fixed torque effect.

3. Arrangement according to claim 1 or 2, characterised in that arranged directly after the first drive means (40a, 40b, 41) there are disposal arrangements (24, 25) for the electrode (1).

4. Arrangement according to at least one of the preceding claims, characterised in that the first drive means (40a, 40b, 41) have a pair of clamp rollers (40a, 40b) secured to a supporting arm (6) which is on the outgoing side with regard to the axial electrode movement and which also supports the electrode guide head (4).

5. Arrangement according to at least one of the preceding claims, characterised in that provided between at least one electrode guide head (3; 4) and electrode guide elements (11a, 11b; 42) adjacent thereto and arranged respectively outside the working zone (3...4), there is an electrode guide element consisting of telescopic supports (44; 60) and coordinated articulated guides (43a, b; 64, 65).

6. Arrangement according to at least one of the preceding claims, characterised in that provided in the area of the electrode guide zone there is a travel pick-up measuring element (35) for detecting travel of the electrode (1), said element communicating with control arrangements for automatic transportation of the electrode (1).

7. Arrangement according to claim 6, characterised in that the measuring element (35) is included in an evaluation device for the detection of electrode cracks.

8. Arrangement according to claim 6 or 7, characterised in that second drive means (11a, 11b, 12) are provided to drive the electrode (1) outside the work area (3...4) and are connected with a travel or speed measuring element (38) which together with the first measuring element (35), is coupled to a device for determining a speed difference and in that the output of this device is connected with the input of a further device for the purpose of regulating the second electrode drive means (11a, b, 12).

9. Arrangement according to at least one of the preceding claims, characterized in that the first drive means (40a, 40b, 41) and/or the counter-holding means (31, 32, 34) have a transport wheel (31), which has a wedge-shaped groove, and a pressure roller (32) which presses the electrode (1) into the groove in a resilient manner.

10. Arrangement according to claim 9, characterised in that the transport wheel (31) is surrounded by a housing block (7) which has conveyor channels (71 - 76) which run essentially tangentially to the groove in the transport wheel.

11. Arrangement according to at least one of the preceding claims, characterised in that the electrode guide elements lying outside the work area (3...4) contain ribbon guide elements (50, 51) and the electrode supply roller (54) with the electrode casing surface lies directly upon one of the ribbon guide elements (51).

12. Arrangement according to at least one of the preceding claims, characterised by a device (80) for receiving several electrode supply rollers (54a, 54b, 54c) and by a controllable switch-over device (82, 83, 83a) for the purpose of introducing the electrode (1) located on a selected supply roller (54a, b, c) into the electrode guide elements.

**Revendications**

1. Dispositif pour guider une électrode à découper filiforme ou en ruban (1) dans une machine-outil à l'aide d'une tête supérieure et d'une tête inférieure de guidage d'électrode (3, 4), avec des premiers moyens d'entraînement (40a, 40b, 41) pour tirer axialement l'électrode à découper (1) à travers la zone de travail et avec des moyens de maintien (31, 32, 34) agissant sur l'électrode à découper (1) pour la production d'un effort défini de traction axiale sur l'électrode à découper (1),

caractérisé en ce que les premiers moyens d'entraînement (40a, 40b, 41) sont disposés dans la zone d'une tête de guidage d'électrode (4) et les moyens de maintien (31, 32, 34) dans la zone de l'autre tête de guidage d'électrode (3) de manière que l'électrode à découper (1) ne soit sollicitée que dans la zone de travail par l'effort de traction nécessaire pour effectuer l'étincelage et que la zone de guidage d'électrode qui reste soit maintenue exempte d'efforts augmentés de traction sur l'électrode à découper (1).

2. Dispositif selon la revendication 1, caractérisé en ce que les premiers moyens d'entraînement (40a, 40b, 41) présentent un entraînement par moteur (41) rigide en vitesse et les moyens de maintien (31, 32, 34) présentent un rouleau (31) guidant l'électrode (1), avec effet rigide en couple de torsion.

3. Dispositif selon la revendication 1 ou 2, caractérisé en ce que les premiers moyens d'entraînement (40a, 40b, 41) sont directement suivis de dispositifs de dégagement (24, 25) de l'électrode (1).

4. Dispositif selon au moins l'une des revendications précédentes, caractérisé en ce que les premiers moyens d'entraînement (40a, 40b, 41) présentent une paire de rouleaux de serrage (40a, 40b) qui est fixée à un bras de support (6) du côté sortie relativement au mouvement axial de l'électrode, lequel porte également la tête de guidage d'électrode (4).

5. Dispositif selon au moins l'une des revendications précédentes, caractérisé en ce qu'entre au moins une tête de guidage d'électrode (3; 4) et les éléments de guidage d'électrode (11a, 11b; 42) qui en sont voisins et qui sont en-dehors de la zone de traitement (3...4) est prévu un élément de guidage d'électrode se composant d'appuis télescopiques (44; 60) et guidages articulés correspondants (43a, b; 64, 65).

6. Dispositif selon au moins l'une des revendications précédentes, caractérisé en ce que dans le domaine de la zone de guidage de l'électrode est prévu un élément de mesure (35) recevant le parcours pour la détection du parcours de l'électrode (1) et qui est relié à des dispositifs de commande pour le transport automatique de l'électrode (1).

7. Dispositif selon la revendication 6, caractérisé en ce que l'élément de mesure (35) est inséré dans un système d'évaluation pour la détection de fissures dans l'électrode.

8. Dispositif selon la revendication 6 ou 7, caractérisé en ce que des seconds moyens d'entraînement (11a, 11b, 12) pour l'entraînement de l'électrode (1) en-dehors de la zone de travail (3...4) sont prévus, qui sont reliés à un élément (38) de mesure du parcours ou respectivement de la vitesse, qui, avec le premier élément de mesure (35), est raccordé à un dispositif pour produire une différence de vitesse et en ce que la sortie de ce dispositif est reliée à une autre dispositif pour régler le second moyen d'entraînement de l'électrode (11a, b, 12).

9. Dispositif selon au moins l'une des revendications précédentes, caractérisé en ce que les premiers moyens d'entraînement (40a, 40b, 41) et/ou les moyens de maintien (31, 32, 34) preésentent une roue de transport ayant une rainure en forme de coin (31) et un rouleau de pression (32), pressant de manière élastique l'électrode (1) dans la rainure.

10. Dispositif selon la revendication 9, caractérisé en ce que la roue de transport (31) est entourée d'un bloc (7) qui présente des canaux d'alimentation (71-76) essentiellement tangentiels à la rainure dans la roue de transport.

11. Dispositif sélon au moins l'une des revendications précédentes, caractérisé en ce que les éléments de guidage d'électrode se trouvant en-dehors de la zone de travail (3...4) contiennent des éléments de guidage à bande (50, 51) et le rouleau d'alimentation de l'électrode (54) repose, avec la surface d'enveloppe de l'électrode, directement sur l'un des élémens de guidage à bande (51).

12. Dispositif selon au moins l'une des revendications précédentes, caractérisé par un système (80) pour la réception de plusieurs rouleaux de réserve d'électrode (54a, 54b, 54c) et par un système dirigeable de changement (82, 83, 83a) pour introduire l'électrode (1) se trouvant sur le rouleau de réserve choisi (54a, b, c) dans les éléments de guidage de l'électrode.

FIG. 1

32

1

31

33

FIG. 2

α

1

4

43a

46

44

45

47

6

42

43b

FIG. 3

1

40b

40a

1

3

FIG. 4

0 161 657

FIG. 5

FIG. 6